# EUROPEAN PATENT APPLICATION

(11) **EP 4 729 744 A1**
(43) Date of publication of application: **22.04.2026**
(21) Application number: 25206500.8
(22) Date of filing: 02.10.2025
(51) Int. Cl.: F01D 5/28

(54) **SURFACE ALLOY RE-MELTING TO INCREASE RESISTANCE TO OXIDATION**

(30) Priority: 04.10.2024 US 202418907082
(71) Applicant: PRATT & WHITNEY CANADA CORP., Longueuil, Québec J4G 1A1 (CA)
(72) Inventor: LAROSE, Joel, (01BE5) Longueuil, J4G 1A1 (CA); BOUTHILLIER, Alain, (01BE5) Longueuil, J4G 1A1 (CA); SAEED, Ata, (01BE5) Longueuil, J4G 1A1 (CA); FARAH, Assaf, (01BE5) Longueuil, J4G 1A1 (CA)
(74) Representative: Dehns

(57) **Abstract**

A method for increasing oxidation resistance of an alloy surface comprises scanning a high energy source onto the alloy surface to melt the alloy surface; after the melted alloy surface solidifies, re-melting at least a partial area of the alloy surface using the high energy source to thereby form a re-melt layer, such that the alloy surface comprises a first oxidation resistance, the re-melt layer comprises a second oxidation resistance, and the second oxidation resistance is greater than the first oxidation resistance.

## Description

### FIELD

The subject matter disclosed herein relates to protecting a base material and, in particular, to increasing the oxidation resistance of a surface of an alloy.

### BACKGROUND

High strength, high temperature alloys, e.g., superalloys, can be prone to accelerated surface degradation when exposed to certain temperatures and thermal exposure cycling rates, also known as "internal attack". One solution to prevent or delay internal attack requires coating the high strength, high temperature alloy surface with a high aluminum content containing layer. The high aluminum content containing layer can be applied through diffusion or overlay processes. Another solution requires exposing the high strength, high temperature alloy to an oxygen-containing atmosphere with a specific concentration of oxygen. The exposure to oxygen triggers a "pre-oxidation" of the high strength, high temperature alloy surface and also delays the aforementioned internal attack. However, both solutions are not cost-effective.

There exists a need for a more cost-effective solution for protecting a base material, such as a high strength, high temperature alloy, e.g., superalloy.

### SUMMARY

According to an aspect of the present disclosure, there is provided a method for increasing oxidation resistance of an alloy surface, comprising: scanning a high energy source onto the alloy surface to melt the alloy surface; after the melted alloy surface solidifies, re-melting at least a partial area of the alloy surface using the high energy source to thereby form a re-melt layer such that: the alloy surface comprises a first oxidation resistance, the re-melt layer comprises a second oxidation resistance, and the second oxidation resistance is greater than the first oxidation resistance.

In yet another aspect, the present disclosure is directed to a gas turbine engine component having increased oxidation resistance, comprising: an alloy having a surface including at least a partial area comprising a re-melt layer having a controlled depth; wherein the surface of the alloy comprises a first oxidation resistance, the re-melt layer comprises a second oxidation resistance, and the second oxidation resistance is greater than the first oxidation resistance.

In still yet another aspect, the present disclosure is directed to a gas turbine engine having increased oxidation resistance, comprising: one or more gas turbine engine components comprising an alloy having a surface including at least a partial area comprising a re-melt layer; wherein the surface of the alloy comprises a first oxidation resistance, the re-melt layer comprises a second oxidation resistance, and the second oxidation resistance is greater than the first oxidation resistance.

In further examples of the present disclosure, including further examples of the above, the alloy surface comprises a first residual stress, the re-melt layer comprises a second residual stress, and the second residual stress is less than the first residual stress.

In further examples of the present disclosure, including further examples of the above, the alloy surface comprises a first microstructure, the re-melt layer comprises a second microstructure, and the first microstructure and second microstructure are the same.

In further examples of the present disclosure, including further examples of the above, the high energy source comprises one or more of a laser, an electron beam or a quartz lamp.

In further examples of the present disclosure, including further examples of the above, the alloy surface comprises a gas turbine engine component having at least one cooling aperture.

In further examples of the present disclosure, including further examples of the above, the re-melt layer includes a weld bead formed within the at least one cooling aperture.

In further examples of the present disclosure, including further examples of the above, the alloy comprises a superalloy.

In further examples of the present disclosure, including further examples of the above, the surface of the alloy comprises a first residual stress, the re-melt layer comprises a second residual stress, and the second residual stress is less than the first residual stress.

In further examples of the present disclosure, including further examples of the above, the surface of the alloy comprises a first microstructure, the re-melt layer comprises a second microstructure, and the first microstructure and second microstructure are the same.

In further examples of the present disclosure, including further examples of the above, the gas turbine engine component further comprises at least one cooling aperture formed through the surface and within the alloy.

In further examples of the present disclosure, including further examples of the above, the re-melt layer includes a weld bead formed within the at least one cooling aperture.

In further examples of the present disclosure, including further examples of the above, the alloy comprises a superalloy.

In further examples of the present disclosure, including further examples of the above, the surface of the alloy comprises a first residual stress, the re-melt layer comprises a second residual stress, and the second residual stress is less than the first residual stress.

In further examples of the present disclosure, including further examples of the above, the surface of the alloy comprises a first microstructure, the re-melt layer comprises a second microstructure, and the first microstructure and second microstructure are the same.

In further examples of the present disclosure, including further examples of the above, the re-melt layer has a controlled depth.

In further examples of the present disclosure, including further examples of the above, the alloy comprises a superalloy.

In further examples of the present disclosure, including further examples of the above, the gas turbine engine further comprises at least one cooling aperture formed through the surface and within the alloy.

In further examples of the present disclosure, including further examples of the above, the re-melt layer includes a weld bead formed within the at least one cooling aperture.

### BRIEF DESCRIPTION OF FIGURES

The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a flowchart illustrating an exemplary method for increasing the oxidation resistance of an alloy surface.
FIG. 2 is a microphotograph depicting a cross-sectional view of a piece of sheet metal containing a cooling hole possessing internal areas exhibiting damage and an internal area free of damage.

### DETAILED DESCRIPTION OF THE INVENTION

The embodiments of the present disclosure can comprise the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The present disclosure is directed to an exemplary method for increasing the oxidation resistance of an alloy surface of a gas turbine engine component for use in a gas turbine engine. In addition, the method achieves that result while also reducing the residual stress of the alloy surface and not adversely affecting the underlying microstructure of the alloy surface. The term "alloy surface" refers to the surface of the alloy. The term "alloy" may include, but is not limited to, one or more superalloys, metal alloys and metalloid alloys suitable for use in fabricating a gas turbine engine component for use in a gas turbine engine. For example, alumina-forming nickel superalloys containing less than 4 weight percent aluminum may be particularly suitable. For instance, a suitable superalloy for use herein may include Haynes^{®} 233^{®}, commercially available from Haynes International, Inc., Kokomo, Indiana.

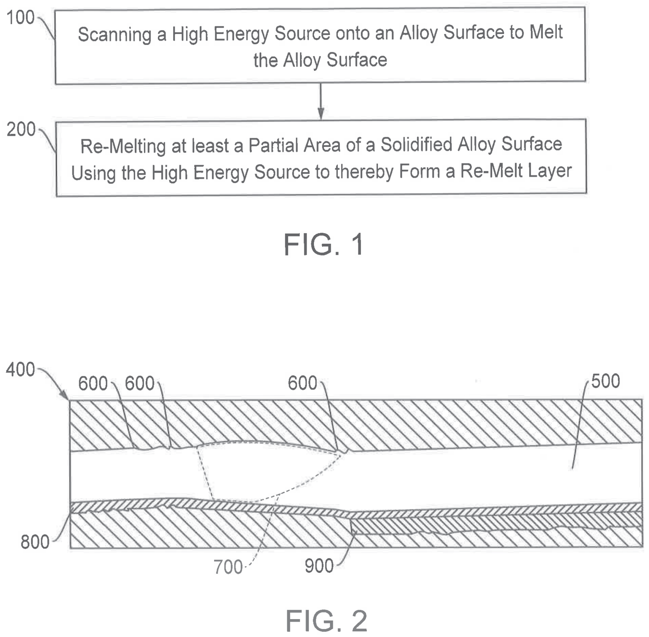

Referring now to FIG. 1, an exemplary flowchart illustrating the method disclosed herein is shown. At an exemplary step 100 of FIG. 1, a high energy source may scan a surface of an alloy, e.g., a superalloy, composed by the gas turbine engine component to melt the alloy surface. The high energy source may comprise any high energy source capable of melting the alloy disclosed herein. Suitable high energy source may include, but is not limited to, one or more of a laser, an electron beam or a quartz lamp. Once the melted surface solidifies, the high energy source may rescan and re-melt at least a partial area of the melted surface of the superalloy at an exemplary step 200 of FIG. 1. As a result, the partial area may exhibit and possess a re-melt layer per exemplary step 200. The re-melt layer may exhibit and possess a controlled re-melt depth, for example within the partial area of the surface of the superalloy. The controlled re-melt depth may exhibit and possess a range of depths that meet the engineering intent of the part. For instance, in at least one embodiment, the controlled re-melt depth may form a weld bead within a cooling hole. The weld bead may be a raised seam or fillet. The weld bead meets the engineering intent of the part by increasing the oxidation resistance of the alloy surface and reducing the residual stress of the alloy surface while not adversely affecting the underlying microstructure (See FIG. 2). The controlled re-melt depth may be achieved by optimizing at least one operating parameter of the high energy source. For example, a scanning pattern and an intensity of the high energy source, as well as additional operating parameters, may be optimized. Additional operating parameters may include, but are not limited to, one or more of beam width, frequency and power. The resultant controlled re-melt depth may be sufficient to increase oxidation resistance of the superalloy; reduce a residual stress of the surface of the superalloy; and, not adversely affect an underlying microstructure of the surface of the superalloy. Consequently, whatever high energy source, or combination of high energy sources, are utilized, the operating parameters may be selected in order to achieve the increase of the oxidation resistance of the superalloy; the reduction of residual stress of the superalloy; and, not adversely affect the underlying microstructure of the superalloy.

Referring now to FIG. 2, a microphotograph depicting a piece of sheet metal 400 of the aforementioned Haynes^{®} 233^{®} superalloy surface treated using the exemplary method disclosed herein. The sheet metal 400 includes at least one cooling aperture 500, also known as a cooling hole, possessing one or more internal areas exhibiting damage 600; an internal area free of damage 700; a bond coat 800; and, a thermal barrier coating 900 (See FIG. 2). The internal areas exhibiting damage 600 may exhibit and possess the accelerated surface degradation, also known as "internal attack", discussed above. In contrast, the internal area free of damage 700 includes a weld bead, that is, a re-melted layer formed when surface treating the sheet metal 400 using the exemplary method. As depicted in the microphotograph of FIG. 2, the accelerated surface degradation is not present where the weld bead forms. By performing the exemplary method over an entire surface of an alloy, e.g., a superalloy, composed by the gas turbine engine component, a similar re-melted layer may be formed across the entire surface. As discussed above, the resultant re-melted layer may increase an oxidation resistance of the superalloy; reduce a residual stress of the superalloy; and, not adversely affect an underlying microstructure of the superalloy. When comparing an untreated surface of the superalloy and a surface treated superalloy by the exemplary method, the surface treated superalloy exhibits and possesses an oxidation resistance that is greater than an oxidation resistance of the untreated superalloy. Furthermore, the surface treated superalloy exhibits and possesses a residual stress that is less than a residual stress of the untreated superalloy. Moreover, the surface treated superalloy exhibits and possesses a microstructure that is the same as a microstructure of the untreated superalloy.

When carrying out the exemplary method disclosed herein, the associated costs may be less than the costs attributable to either applying the high aluminum content containing coating or exposing the surface of the superalloy to an oxygen-containing atmosphere. However, the exemplary method disclosed herein may be performed in combination with either one of the aforementioned methods. While such a combined overall method may incur greater costs, the desired result(s) discussed above may still be achieved and the resultant gas turbine engine component may exhibit increased oxidation resistance, reduced residual stress and microstructure as discussed herein.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A method for increasing oxidation resistance of an alloy surface, comprising:
scanning a high energy source onto the alloy surface to melt the alloy surface;
after the melted alloy surface solidifies, re-melting at least a partial area of the alloy surface using the high energy source to thereby form a re-melt layer such that:
the alloy surface comprises a first oxidation resistance,
the re-melt layer comprises a second oxidation resistance, and
the second oxidation resistance is greater than the first oxidation resistance.

2. The method of claim 1, wherein the high energy source comprises one or more of a laser, an electron beam or a quartz lamp.

3. The method of claim 1 or 2, wherein the alloy surface comprises a gas turbine engine component having at least one cooling aperture (500).

4. The method of claim 3, wherein the re-melt layer includes a weld bead (700) formed within the at least one cooling aperture (500).

5. A gas turbine engine component having increased oxidation resistance, comprising:
an alloy (400) having a surface including at least a partial area comprising a re-melt layer having a controlled depth;
wherein the surface of the alloy comprises a first oxidation resistance, the re-melt layer comprises a second oxidation resistance, and the second oxidation resistance is greater than the first oxidation resistance.

6. The gas turbine engine component of claim 5, further comprising at least one cooling aperture (500) formed through the surface and within the alloy (400).

7. The gas turbine engine component of claim 6, wherein the re-melt layer includes a weld bead (700) formed within the at least one cooling aperture (500).

8. A gas turbine engine having increased oxidation resistance, comprising
one or more gas turbine engine components comprising an alloy (400) having a surface including at least a partial area comprising a re-melt layer,
wherein the surface of the alloy (400) comprises a first oxidation resistance, the re-melt layer comprises a second oxidation resistance, and the second oxidation resistance is greater than the first oxidation resistance.

9. The gas turbine engine of claim 8, wherein the re-melt layer has a controlled depth.

10. The method, gas turbine engine, or gas turbine engine component of any preceding claim, wherein the alloy surface comprises a first residual stress, the re-melt layer comprises a second residual stress, and the second residual stress is less than the first residual stress.

11. The method, gas turbine engine, or gas turbine engine component of any preceding claim, wherein the alloy surface comprises a first microstructure, the re-melt layer comprises a second microstructure, and the first microstructure and second microstructure are the same.

12. The method, gas turbine engine, or gas turbine engine of any preceding claim, wherein the alloy (400) comprises a superalloy.

13. The gas turbine engine of any of claims 8 to 12, further comprising at least one cooling aperture (500) formed through the surface and within the alloy (400).

14. The gas turbine engine of claim 13, wherein the re-melt layer includes a weld bead (700) formed within the at least one cooling aperture (500).
